# FASCICULE DE BREVET EUROPEEN

(11) **EP 3 443 266 B1**
(45) Date de publication et mention de la délivrance du brevet: **29.04.2020**
(21) Numéro de dépôt: 17720199.3
(22) Date de dépôt: 06.04.2017
(51) Int. Cl.: F23R 3/28, F23R 3/54

(54) **INJECTEURS AMELIORES POUR CHAMBRE DE COMBUSTION DE TURBINE A GAZ**
VERBESSERTE INJEKTOREN FÜR EINE GASTURBINENBRENNKAMMER
IMPROVED INJECTORS FOR GAS TURBINE COMBUSTION CHAMBER

(30) Priorité: 13.04.2016 FR 1653260
(43) Date de publication de la demande: 20.02.2019
(73) Titulaire: Safran Helicopter Engines, 64510 Bordes (FR)
(72) Inventeur: TALIERCIO, Guillaume, 77550 MOISSY-CRAMAYEL CEDEX (FR); SAVARY, Nicolas, 77550 MOISSY-CRAMAYEL CEDEX (FR); LAMAISON, Olivier, 77550 MOISSY-CRAMAYEL CEDEX (FR)
(74) Mandataire: Cabinet Beau de Loménie
(86) Numéro de dépôt international: PCT/FR2017/050830
(87) Numéro de publication internationale: WO 2017/178736

(56) Documents cités:
- FR-A1- 2 971 039
- US-A- 4 761 959
- US-A1- 2009 236 442

## Description

### DOMAINE TECHNIQUE GENERAL

La présente invention concerne le domaine des chambres de combustion pour aéronef, et plus précisément les injecteurs pour de telles chambres de combustion.

### ETAT DE L'ART

Les injecteurs employés au sein des chambres de combustion d'aéronefs sont typiquement configurés de manière à présenter des performances optimisées en fonction des différents régimes de fonctionnement.

Ces différents régimes de combustion ont toutefois des caractéristiques très distinctes, impliquant parfois des contraintes antagonistes, ce qui nécessite de trouver un compromis entre les différentes performances de chambre.

De ce fait, les injecteurs actuels offrent une marge importante en termes d'optimisation. Un injecteur selon le préambule de la revendication 1 est connu de US 2009/0236442 A1.

### PRESENTATION DE L'INVENTION

La présente invention vise ainsi à proposer un système répondant au moins partiellement à cette problématique.

A cet effet, la présente invention propose un injecteur de chambre de combustion de turbine à gaz, comprenant
- un système d'alimentation en fluide,
- un corps d'injecteur s'étendant selon un axe longitudinal,
- une tête d'injection disposée sur le corps d'injecteur, configurée de manière à projeter ledit fluide selon une direction inclinée par rapport à l'axe longitudinal
ledit injecteur comprend en outre un actionneur configuré pour sélectivement entrainer l'injecteur en rotation selon l'axe longitudinal, de manière à modifier la direction de projection du fluide, l'actionneur étant configuré de manière à permettre une modification de l'orientation de l'injecteur par rotation selon l'axe longitudinale d'une amplitude inférieure ou égale à 90°.

Le système d'alimentation en fluide comprend typiquement une rampe souple ou une rampe rigide munie d'une articulation étanche au niveau de l'injecteur.

L'invention concerne également une chambre à combustion comprenant au moins un injecteur tel que défini précédemment.
La chambre de combustion est par exemple une chambre de combustion à technologie giratoire, et dans laquelle ledit au moins un injecteur est disposé en virole externe de la chambre de combustion.
L'actionneur comprend typiquement un système de pilotage configuré de manière à modifier l'orientation de l'injecteur en fonction d'une pression de contournement de la chambre de combustion et/ou d'une pression de carburant.

L'invention concerne par ailleurs une turbomachine comprenant une chambre à combustion telle que défini précédemment.
L'invention concerne en outre un aéronef comprenant une telle turbomachine.

### PRESENTATION DES FIGURES

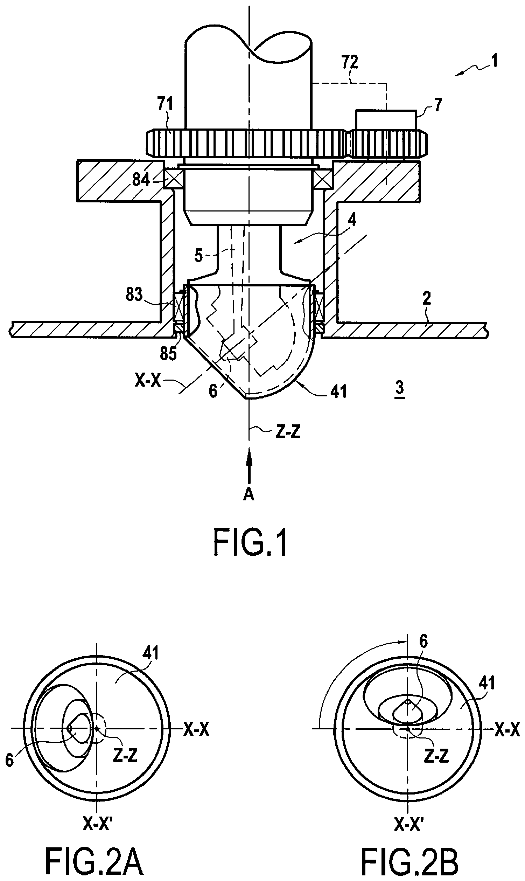

D'autres caractéristiques, buts et avantages de l'invention ressortiront de la description qui suit, qui est purement illustrative et non limitative, et qui doit être lue en regard des dessins annexés, sur lesquels la figure 1 représente schématiquement un injecteur selon un aspect de l'invention, et les figures 2A et 2B en illustrent schématiquement le fonctionnement.

Sur l'ensemble des figures, les éléments en commun sont repérés par des références numériques identiques.

### DESCRIPTION DETAILLEE

La figure 1 représente schématiquement un injecteur selon un aspect de l'invention, et les figures 2A et 2B en illustrent schématiquement le fonctionnement.

On représente sur la figure 1 une vue d'un injecteur 1 monté dans une paroi 2 de chambre à combustion 3, typiquement une chambre à combustion à technologie giratoire, pouvant par exemple être intégrée dans une turbomachine d'un aéronef.
Dans le cas où la chambre de combustion 3 est à technologie giratoire, l'injecteur 1 est alors par exemple disposé en virole externe de la chambre de combustion 3.

L'injecteur 1 tel que représenté comprend un corps 4, présentant une extrémité 41 faisant saillie dans le volume interne de la chambre de combustion 3. Le corps 4 de l'injecteur 1 s'étend selon une direction longitudinale, définissant un axe longitudinal Z-Z.

Un système d'alimentation en fluide 5 est intégré au corps 4 de l'injecteur 1, de manière à permettre l'alimentation d'une tête d'injection 6 disposée dans l'extrémité 41 du corps 4. La tête d'injection 6 est typiquement formée par une buse d'injection.
Dans l'exemple représenté, le système d'alimentation en fluide 5 est un conduit s'étendant sensiblement selon l'axe longitudinal Z-Z dans le corps 4.

Le système d'alimentation en fluide 5 peut comprendre une rampe, présentant par exemple une portion flexible, ou une rampe rigide munie d'une articulation étanche au niveau de l'injecteur.

L'extrémité 41 telle que représentée a une forme générale hémisphérique, dont une partie est évidée pour permettre l'implantation de la tête d'injection 6. La tête d'injection 6 définit ainsi une direction d'injection que l'on repère par l'axe d'injection X-X sur les figures. Cet axe d'injection X-X est incliné par rapport à l'axe longitudinal Z-Z, d'un un angle strictement compris entre 0 et 90°.

Lors du fonctionnement de la chambre à combustion 3, l'injecteur 1 est donc mis en service pour réaliser une injection de carburant, selon une direction d'injection définie par l'orientation de la tête d'injection 6.

Afin de permettre d'optimiser l'injection quelle que soit le mode de fonctionnement de la chambre de combustion 3, le système tel que proposé comprend également un actionneur 7 relié au corps 4 de l'injecteur 1 via des moyens d'entrainement en rotation 71, ici une roue crantée.
L'actionneur 7 comprend par exemple des moyens d'entrainement par crémaillère, par tringle ou tous autres moyens d'entrainement adaptés. Le corps 4 de l'injecteur 1 est relié aux parois 2 de la chambre de combustion 3 via des paliers 83 et 84, configurés de manière à permettre un degré de liberté en rotation autour de l'axe longitudinal Z-Z.
Dans l'exemple représenté, un premier palier 83 est disposé à proximité de l'extrémité 41 du corps 4, et un second palier 84 est disposé plus en retrait sur une partie du corps 4 plus éloignée de la chambre de combustion 3.
Un élément isolant 85 est typiquement disposé entre le corps 4 de l'injecteur 1 et la paroi 2 de la chambre de combustion 3 afin d'isoler et protéger le premier palier 83 de la chambre de combustion 3.

L'actionneur 7 permet ainsi de faire pivoter l'injecteur 1 autour de l'axe longitudinal Z-Z. L'amplitude de ce pivot est typiquement limitée ; par exemple à un maximum de 180° ou encore à un maximum de 90°.
Les figures 2A et 2B sont deux vues selon la direction A repérée sur la figure 1. On représente ainsi schématiquement sur ces deux figures 2A et 2B un exemple de modification de l'orientation de l'injecteur 1, la direction d'injection passant de l'axe X-X à l'axe X-X', formant un angle de 90° avec l'axe X-X.

Une telle modification de l'orientation de l'injecteur 1, et donc de la direction d'injection de fluide par la tête d'injection 6 permet d'optimiser l'injection en fonction du régime de fonctionnement de la chambre de combustion 3.
En effet, les injecteurs conventionnels pour chambre de combustion sont fixes, et ne permettent donc pas d'adapter l'injection au mode de fonctionnement de la chambre de combustion, ce qui entraine une consommation accrue de carburant lors de certains modes de fonctionnement, par exemple à faible régime.

La structure proposée permet ainsi d'optimiser le fonctionnement de la chambre de combustion 3, quel que soit son mode de fonctionnement, et permet donc d'améliorer la robustesse du système de combustion, tout en améliorant la consommation à charge partielle.
Une rotation d'une amplitude de l'ordre de 90° est typiquement suffisante pour permettre d'optimiser le fonctionnement de la chambre de combustion dans ses différents modes de fonctionnement.

A titre d'exemple, dans une chambre de combustion 3 comprenant plusieurs injecteurs, chacun de ces injecteurs peut alors être piloté indépendamment afin d'optimiser le fonctionnement de la chambre de combustion 3.

L'orientation des injecteurs peut être réalisée de manière active, par exemple via l'association d'un calculateur et d'un actionneur, ou passive via un pilotage par la pression de l'air dans la chambre de combustion 3 et/ou la pression dans le système d'alimentation en fluide 5.

A titre d'exemple pour la réalisation d'un pilotage du type passif, un repiquage de pression au sein de la chambre de combustion 3 et/ou au sein du système d'alimentation en fluide 5 peut être réalisé pour le pilotage d'un système tel qu'un vérin ou un piston entrainant les moyens d'entrainement en rotation 71 et réalisant ainsi l'orientation de l'injecteur 1.
Une pression de pilotage peut ainsi être prélevée au sein de la chambre de combustion 3 et/ou au sein du système d'alimentation en fluide 5, et s'opposer à un effort de poussée par exemple exercé par un moyen de rappel tel qu'un ressort définissant une orientation par défaut de l'actionneur 1. La variation de pression au sein de la chambre de combustion 3 et/ou au sein du système d'alimentation en fluide 5 entraine donc une modification de l'orientation de l'injecteur 1 permettant ainsi d'optimiser l'injection. L'association du vérin ou piston et des moyens de repiquage de pression forment alors un actionneur 7 du type passif permettant de réaliser un pilotage en continu de l'orientation de l'injecteur 1.

A titre d'exemple pour la réalisation d'un pilotage du type actif, l'actionneur 7 peut par exemple être configuré de manière à piloter l'orientation de l'injecteur considéré en fonction d'une pression relevée au sein de la chambre de combustion 3, dans un circuit d'air de contournement de la chambre de combustion, ou encore en fonction de la pression dans le système d'alimentation en fluide 5. Plus généralement, l'actionneur 7 pilote typiquement l'orientation de l'injecteur considéré en fonction de la charge du moteur comprenant la chambre à combustion. Dans l'exemple illustré sur la figure 1, on représente schématiquement un capteur 72 configuré pour mesurer la pression de fluide dans le système d'alimentation en fluide 5, l'actionneur 7 pouvant ainsi piloter l'orientation de l'injecteur 1 en fonction de cette mesure.

L'actionneur 7 est typiquement configuré de manière à réaliser un pilotage en continu de l'orientation de l'injecteur 1, ce qui, permet notamment d'éviter l'apparition de phénomènes transitoires qui pourraient endommager la chambre de combustion.

## Revendications

1. Injecteur (1) de chambre de combustion de turbine à gaz, comprenant
- un système d'alimentation en fluide (5),
- un corps d'injecteur (4) s'étendant selon un axe longitudinal (Z-Z),
- une tête d'injection (6) disposée sur le corps d'injecteur (4), configurée de manière à projeter ledit fluide selon une direction (X-X) inclinée par rapport à l'axe longitudinal (Z-Z)
- un actionneur (7) configuré pour sélectivement entrainer l'injecteur (1) en rotation selon l'axe longitudinal (Z-Z), de manière à modifier la direction de projection du fluide (X-X),
**caractérisé en ce que** l'actionneur (7) est configuré de manière à permettre une modification de l'orientation de l'injecteur (1) par rotation selon l'axe longitudinale (Z-Z) d'une amplitude inférieure ou égale à 90°.

2. Injecteur (1) selon la revendication 1, dans lequel ledit système d'alimentation en fluide (5) comprend une rampe souple ou une rampe rigide munie d'une articulation étanche la reliant à l'injecteur (1).

3. Chambre à combustion (3) comprenant au moins un injecteur (1) selon l'une des revendications 1 ou 2.

4. Chambre à combustion (3) selon la revendication 3, dans laquelle ladite chambre de combustion est une chambre de combustion à technologie giratoire, et dans laquelle ledit au moins un injecteur (1) est disposé en virole externe de la chambre de combustion.

5. Chambre à combustion (3) selon l'une des revendications 3 ou 4, dans laquelle ledit actionneur (7) comprend un système de pilotage configuré de manière à modifier l'orientation de l'injecteur (1) en fonction d'une pression de contournement de la chambre de combustion et/ou d'une pression de carburant.

6. Turbomachine comprenant une chambre à combustion (3) selon l'une des revendications 3 à 5.

7. Aéronef comprenant une turbomachine selon la revendication 6.

## Patentansprüche

1. Injektor (1) für eine Verbrennungskammer einer Gasturbine, umfassend
- ein System zur Fluidversorgung (5),
- einen Injektorkörper (4), der sich entlang einer Längsachse (Z-Z) erstreckt,
- einen Einspritzkopf (6), der an dem Injektorkörper (4) angeordnet und auf eine Weise ausgestaltet ist, um das Fluid gemäß einer Richtung (X-X) zu projizieren, die in Bezug auf die Längsachse (Z-Z) geneigt ist,
- ein Stellglied (7), das dazu ausgestaltet ist, selektiv den Injektor (1) gemäß der Längsachse (Z-Z) in Drehung zu versetzen, auf eine Weise, um die Richtung der Projektion des Fluids (X-X) zu modifizieren,
**dadurch gekennzeichnet, dass** das Stellglied (7) auf eine Weise ausgestaltet ist, um eine Modifikation der Orientierung des Injektors (1) durch Drehung gemäß der Längsachse (Z-Z) mit einer Amplitude kleiner als oder gleich 90° zu erlauben.

2. Injektor (1) nach Anspruch 1, wobei das System zur Fluidversorgung (5) einen elastischen Verteiler oder einen starren Verteiler umfasst, der mit einer dichten Anlenkung versehen ist, die ihn mit dem Injektor (1) verbindet.

3. Verbrennungskammer (3), umfassend zumindest einen Injektor (1) nach einem der Ansprüche 1 oder 2.

4. Verbrennungskammer (3) nach Anspruch 3, wobei die Verbrennungskammer eine Verbrennungskammer mit Verwirbelungstechnologie ist, und wobei der zumindest eine Injektor (1) im äußeren Mantel der Verbrennungskammer angeordnet ist.

5. Verbrennungskammer (3) nach einem der Ansprüche 3 oder 4, wobei das Stellglied (7) ein Pilotsteuersystem umfasst, das auf eine Weise ausgestaltet ist, um die Orientierung des Injektors (1) in Abhängigkeit von einem Bypass-Druck der Verbrennungskammer und/oder einem Brennstoffdruck zu modifizieren.

6. Turbomaschine, umfassend eine Verbrennungskammer (3) nach einem der Ansprüche 3 bis 5.

7. Luftfahrzeug, umfassend eine Turbomaschine nach Anspruch 6.

## Claims

1. An injector (1) for a gas turbine combustion chamber, the injector comprising:
- a fluid feed system (5);
- an injector body (4) extending along a longitudinal axis (Z-Z);
- an injection head (6) arranged on the injector body (4) and configured to spray said fluid in a direction (X-X) that is inclined relative to the longitudinal axis (Z-Z); and
- an actuator (7) configured to turn the injector (1) selectively about the longitudinal axis (Z-Z) so as to vary the direction (X-X) in which the fluid is sprayed;
the injector being **characterized in that** the actuator (7) is configured to enable the orientation of the injector (1) to be varied by turning about the longitudinal axis (Z-Z) through an amplitude less than or equal to 90°.

2. An injector (1) according to claim 1, wherein said fluid feed system (5) includes a flexible feed line or a rigid feed line having a leaktight hinge connecting it to the injector (1).

3. A combustion chamber (3) including at least one injector (1) according to claim 1 or claim 2.

4. A combustion chamber (3) according to claim 2, wherein said combustion chamber is a gyratory technology combustion chamber, and wherein said at least one injector (1) is arranged in a sleeve outside the combustion chamber.

5. A combustion chamber (3) according to claim 3 or claim 4, wherein said actuator (7) comprises a control system configured to vary the orientation of the injector (1) as a function of a pressure bypassing the combustion chamber and/or a fuel pressure.

6. A turbine engine including a combustion chamber (3) according to any one of claims 3 to 5.

7. An aircraft including a turbine engine according to claim 6.
